(19) Europäisches Patentamt
European Patent Office
Office européen des brevets

(11) Publication number: 0 000 547 A1

(12) EUROPEAN PATENT APPLICATION

(21) Application number: 78100447.8

(22) Date of filing: 20.07.78

(51) Int. Cl.$^2$: C 08 G 63/68, C 08 L 69/00

(30) Priority: 01.08.77 US 820664

(43) Date of publication of application: 07.02.79 Bulletin 79/3

(84) Designated contracting states: DE FR GB NL

(71) Applicant: Mobay Chemical Corporation
Patent Department
Penn Lincoln Parkway West Pittsburgh
Pennsylvania 15205. (US)

(72) Inventor: Baron, Arthur L.
211 East Thistle Court
New Martinsville W.VA 26155. (US)

(72) Inventor: Sivaramakrishnan, Paramesvar
159 Fairview Drive
New Martinsville W.VA 26155. (US)

(74) Representative: Dill, Erwin, Dr. et al
c/o BAYER AG
Zentralbereich Patente
Marken und Lizenzen Bayerwerk
D-5090 Leverkusen 1. (DE)

# (54) Aromatic polycarbonates containing sulphur, method for their preparation, and their glass-reinforced compositions.

(57) A copolycarbonate is provided based on aromatic diphenol and an aromatic sulfonyl diphenol. By incorporating an effective amount of an aromatic sulfonyl diphenol, based on the total diphenol content, having a 4,4'-isomer purity of at least about 99,9 wt.-% into the polymer, the heat deflection temperature of the copolycarbonate is substantially improved. In a preferred embodiment, the copolycarbonate is reinforced with glass fibers to provide an advanced engineering composite having good physical properties, especially improved heat deflection temperatures.

EP 0 000 547 A1

Croydon Printing Company Ltd.

TITLE see front page

NOVEL POLYCARBONATE COMPOSITIONS

ABSTRACT OF THE DISCLOSURE

A copolycarbonate is provided based on aromatic diphenol and an aromatic sulfonyl diphenol. By incorporating an effective amount of an aromatic sulfonyl diphenol, based on the total diphenol content, having a 4,4'-isomer purity of at least about 99 wt. % into the polymer, the heat deflection temperature of the copolycarbonate is substantially improved. In a preferred emodiment, the copolycarbonate is reinforced with glass fibers to provide an advanced engineering composite having good physical properties, especially improved heat deflection temperatures.

TITLE MODIFIED see front page

NOVEL POLYCARBONATE COMPOSITIONS

## FIELD OF THE INVENTION

This invention relates to polycarbonate polymers and more particularly to polycarbonate copolymers having improved heat deflection temperatures and good physical properties.

## BACKGROUND OF THE INVENTION

Polycarbonates derived from reactions involving organic dihydroxy compounds and carbonic acid derivatives have found extensive commercial application because of their excellent mechanical and physical properties. These thermoplastic polymers are particularly suited for the manufacture of molded articles where impact strength, rigidity, toughness, thermal and dimensional stability as well as excellent electrical properties are required.

However, one deficiency of polycarbonate when used in molded articles is the heat deflection temperature of the polycarbonate polymer. As determined by ASTM D-648/72, the heat deflection temperature defines the temperature at which a 0.25 mm deflection occurs when a specimen 127 mm in length, 13 mm in depth and 3 mm to 13 mm in width are subjected to a load applied at its center to give maximum fiber stresses of 66 psi (455 k Pa) or 264 psi (1820 k Pa). Typical polycarbonates known in the prior art exhibit heat deflection temperatures of from about 135 to 141°C at a 264 psi load.

In accordance with the present invention, a copolycarbonate is provided with improved heat deflection temperature and good physical properties.

SUMMARY OF THE INVENTION

A copolycarbonate having improved heat deflection temperatures along with good physical properties is provided which is comprised of the reaction product of an aromatic diphenol, an effective amount of an aromatic sulfonyl diphenol to improve the heat deflection temperature and a carbonic acid derivative such as phosgene or carbonyl bromide.

DETAILED DESCRIPTION OF THE INVENTION

When used herein, the term "copolycarbonate resin" means the neat resin without additives, and the term "copolycarbonate" means the copolycarbonate resin with additives therein.

The copolycarbonate resin of the invention may be prepared by conventional methods of preparation for polycarbonate resins and may have a weight average molecular weight of 10,000 to 200,000 and preferably have a melt flow rate of about 1 to 24 gm/10 min., most preferably about 2-6 gm/10 min., at 300°C according to ASTM D-1238.

Any suitable process, reactant, catalyst, solvent, reaction conditions and the like for the production of the copolycarbonate resins of the present invention which are customarily employed in polycarbonate resin synthesis may be used, such as disclosed in German Patent Nos. 962,274 and 1,046,311 and U.S. Patent Nos. 2,964,794; 2,970,131; 2,991,273; 2,999,846; 3,028,365; 3,153,008; 3,187,065; 3,215,668; and 3,248,414, all incorporated herein by reference. The preferred process is the interfacial polycondensation process.

According to the interfacial polycondensation process copolycarbonate resins are obtained by reacting the aromatic dihydroxy compounds with an alkali metal hydroxide or alkaline earth metal oxide or hydroxide to form the salt of the hydroxy compounds. The salt mixture is present in an aqueous solution or suspension and is reacted with phosgene, carbonyl bromide, or bischloroformic esters of the aromatic dihydroxy compounds. An organic solvent is provided in the reaction admixture which is a solvent for the polymer but not for the aromatic dihydroxy salts. Thus, chlorinated and non-chlorinated aliphatic hydrocarbons are used as the organic solvent which dissolves the condensation product. Suitable solvents include cyclohexane, methylcyclohexane, benzene, toluene, xylene, methylene chloride, chloroform, carbon tetrachloride and chlorobenzene.

In order to limit the molecular weight, one may use monofunctional reactants such as monophenols, for example, the propyl-, isopropyl- and butyl-phenols, especially p-tert-butyl-phenol and phenol itself. In order to accelerate the reaction, catalysts such as tertiary amines, quaternary ammonium, phosphonium or arsonium salts and the like may be used. The reaction temperature should be about -20°C to + 150°C, preferably 0°C to about 100°C.

According to the polycondensation process in a homogeneous phase, the dissolved reaction components are polycondensed in an inert solvent in the presence of an equivalent amount of a tertiary amine base required for absorption of the generated HCl, such as e.g. N,N-dimethyl-aniline, N,N-dimethyl-cyclohexylamine or preferably pyridine and the like.

In still another process, a diaryl carbonate can be transesterified with the aromatic dihydroxy compounds to form the polycarbonate resin.

It is to be understood that it is possible to combine in a chemically meanigful way in the processes described above both the aromatic dihydroxy compounds and the mono-hydroxy compounds in the form if alkali metal salts and/or bis-haloformic acid esters, and the amount of phosgene or carbonyl bromide then still required in order to obtain high molecular weight products. Other methods of synthesis in forming the polycarbonates of the invention such as disclosed in U.S. Patent 3,912,688, incorporated herein by reference, may also be used.

The aromatic diphenols useful in the practice of the invention include the following compounds: hydroquinone resorcinol, dihydroxydiphenyl, bis-(hydroxyphenyl)-alkanes, bis-(hydroxyphenyl)-cycloalkanes, bis-(hydroxyphenyl)-sulphides, bis-(hydroxyphenyl)-ethers, bis-(hydroxyphenyl)-ketones, bis-(hydroxyphenyl)-sulphoxides and α-α-bis-(hydroxy-phenyl)-diisopropylbenzenes, as well as their nuclear-alkylated and nuclear-halogenated compounds. These and further suitable aromatic dihydroxy compounds are described, for example, in U.S. Patent Nos. 3,028,365, 2,999,835, 3,148,172, 3,271,368, 2,991,273, 3,271,367, 3,280,078, 3,014,891 and 2,999,846 (all incorporated herein by reference), in German Offenlegungsschriften (German Published Specifications) 1,570,703, 2,063,050, 2,063,052, 2,211,956 and 2,211,957, in French Patent Specification 1,561,518 and in the monograph "H. Schnell, Chemistry and Physics of Polycarbonates, Interscience Publishers, New York, 1964".

Preferred bisphenols are those of the formula I

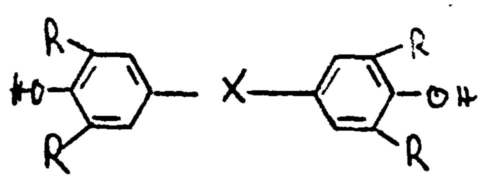

(I)

in which

R is identical or different and denotes H, $C_1$-$C_4$-alkyl, Cl or Br, preferably H or $C_1$-$C_4$-alkyl,

and in which

X is a bond, $C_1$-$C_8$-alkylene, $C_2$-$C_8$-alkylidene, $C_5$-$C_{15}$-cycloalkylene, $C_5$-$C_{15}$-cycloalkylidene, -S-, -SO-, -CO- or

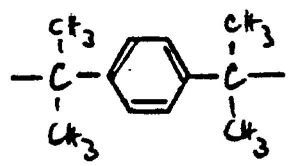

.

Examples of these bisphenols are: 4,4'-dihydroxydiphenyl, 2,2-bis-(4-hydroxyphenyl)-propane (bisphenol A), 2,4-bis-(4-hydroxyphenyl)-2-methylbutane, 1,1-bis-(4-hydroxyphenyl)-cyclohexane, α, α-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis(3,5-dimethyl-4-hydroxyphenyl)-propane, bis-(3,5-dimethyl-4-hydroxyphenyl)-sulphoxide, hydroxy-benzophenone, 2,4-bis-(3,5-dimethyl-4-hydroxyphenyl)-2-methylbutane, 1,1-bis-(3,5-dimethyl-4-hydroxyphenyl)-cyclohexane, α ,α-bis-(3,5-dimethyl-4-hydroxyphenyl)-p-diisopropyl-benzene, 2,2,-bis(3,5-dichloro-4-hydroxyphenyl)- propane and 2,2-bis-(3,5-dibromo-4-hydroxyphenyl)-propane (tetrabromo bisphenol A) propane.

Examples of particularly preferred bisphenols are: 2,2-bis-(4-hydroxyphenyl)-propane, 2,2-bis-(3,5-dimethyl-4-hydroxyphenyl)-propane, 2,2-bis-(3,5-dichloro-4-hydroxyphenyl)-propane, 2,2-bis-(3,5-dibromo-4-hydroxyphenyl)-propane and 1,1-bis-(4-hydroxyphenyl)-cyclohexane.

The most preferred bisphenol is 2,2,-bis-(4-hydroxyphenyl)-propane (bisphenol A).

The aromatic sulfonyl diphenols useful in the practice of the invention are those represented by the structural formula

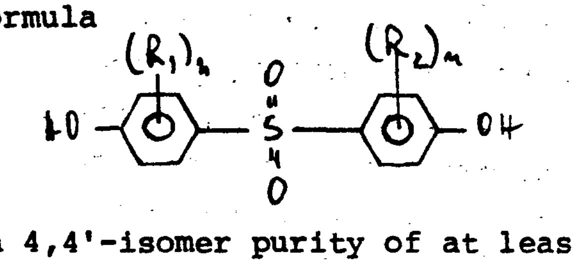

having a 4,4'-isomer purity of at least about 99.9 wt. % wherein

n= 0 to 2, and

$R_1$ and $R_2$ may be the same or different and are H, $C_1$-$C_4$-alkyl, Cl or Br,

and are present in the copolycarbonate in an effective amount, based on the total diphenol content, to improve the heat deflection temperature and mechanical properties of the polycarbonate. Preferably, the aromatic sulfonyl diphenols are present in about 1 to 50 wt. %, based on the total weight of diphenols, and most preferably from about 1 to 20 wt. %.

The aromatic copolycarbonate resins can be branched due to the incorporation of small amounts, preferably of between about 0.05 and 2.0 mol % (relative to diphenols employed), of trifunctional or more than trifunctional compounds, especially compounds with three or more phenolic hydroxyl groups.

Polycarbonate resins of this type are described, for example, in German Offenlegungsschriften (German Publisched

Specifications) 1,570,533, 1,595,762, 2,116,974 and 2,113,347, British Patent Specification 1,079,821 and U.S. Reissue Patent 27,682 (incorporated herein by reference).

Some examples of compounds with three or more than three phenolic hydroxyl groups which can be used are phoroglucinol, 4,6-dimethyl-2,4,6-tri-(4-hydroxyphenyl)-heptene-2, 4,6-dimethyl-2,4,6-tri-(4-hydroxyphenyl)-heptane, 1,4,5-tri-(4-hydroxyphenyl)-benzene, 1,1,1-tri-(4-hydroxyphenyl)-ethane,tri-(4-hydroxyphenyl)-phenylmethane,2,2-bis-(4,4-bis-(4-hydroxyphenyl)-cyclohexyl)-propane, 2,4-bis-(4-hydroxyphenyl-isopropyl)-phenol,2,6-bis-(2-hydroxy-5'-methyl-benzyl)-4-methylphenol, 2-(4-hydroxyphenyl)-2-(2,4-dihydroxyphenyl)-propane, hexa (4-(4-hydroxyphenyl-isopropyl)phenyl) ortho-terephthalic acid ester, tetra-(4-hydroxyphenyl)-methane, tetra- (4-(4-hydroxyphenylisopropyl)-phenoxy)-methane and 1,4-bis-((4'4,''-dihydroxytriphenyl)-methyl)-benzene. Some of the other trifunctional compounds are 2,4-dihydroxybenzoic acid, trimesic acid, cyanuric chloride and 3,3-bis-(4-hydroxyphenyl)-2-oxo-2,3-dihydroindole.

In a preferred embodiment of the present invention, the copolycarbonate may be reinforced with glass fibers, preferably present in from about 5 to 40% by weight, most preferably in from about 10 to 30% by weight, based on the weight of the total composition. Glass fibers which can be used in the present invention are, for example, fibers of low alkali, aluminum-borosilicate glass having a maximum alkali metal oxide content of about 0.2 % by weight (E-glass), of diameter between about 8-15 /u and length between about 300 and 800 /u (short glass fibers) or about 2000 to 12,000 /u (chopped strands) as well as rovings.

The copolycarbonates of the present invention may also contain other conventional resin additives such as pigments, dyes, UV stabilizers, thermal stabilizers, mold release agents and fillers.

Any additives, including glass fibers, may be blended with the copolycarbonate resin in known mixing devices such as kneaders, single-screw extruders, twin-screw extruders, mills and the like.

Surprisingly, the copolycarbonate resins of the invention not only exhibit physical properties similar to standard bisphenol A-based polycarbonates, but also exhibit heat deflection temperatures which are about 5-8°C higher than those of standard bisphenol A-based polycarbonates. Although this improvement in heat deflection temperature may not at first glance appear to be significant, it is noted that this about 5-8°C increase is quite significant for it enlarges the high temperature applications in which aromatic polycarbonates are suitable. Based on past experience, this about 5-8°C increase is believed to equate to an about 10-20°C increase in continuous service temperature under normal part loading. It is noted that the 264 psi ASTM D-648/72 test loading is an extreme "torture test" condition and not one generally encountered in actual use.

Furthermore, reinforcement of the copolycarbonate with glass fibers yields an advanced engineering composite which exhibits a similar improvement in heat deflection temperature and an improvement in adhesion properties of the copolycarbonate resin to the glass fibers as illustrated by the higher tensile strength, higher resistance to bending and somewhat lower ductility (drop dart). This particular combination of properties is desirable for

applications such as power tool housings.

With respect to the glass fiber-reinforced copolycarbonates of the invention, it is noted that the heat deflection temperature and the tensile strength improvements, while apparently modest, are in actuality quite significant when taken in combination with the other properties, especially ductility. All glass fiber-reinforced thermoplastics, with the exception of polycarbonate, are brittle. Composites based on a polycarbonate matrix are ductile, but are excluded from use in certain applications because of relatively minor deficiencies in tensile strength, stiffness (as measured by E-modulus) and continuous use temperature (as measured by heat deflection temperature). The glass-fiber-reinforced composites of the instant invention, based on aromatic diphenol/aromatic sulfonyl diphenol copolymers, correct the above-described deficiencies while retaining substantial ductility and all the other useful properties of conventional polycarbonate composites including moldability, excellent surface appearance, low moisture absorption, good dimensional stability, good electrical properties and the like. Since all previous attempts to raise the heat deflection temperature have resulted in a significant loss of ductility and/or some other important property, the present results herein reported are suprising and unexpected.

Although copolycarbonates and terpolycarbonates based on aromatic sulfonyl diphenols are known in the prior art (see U.S. Patent Nos. 3,023,101, 3,271,367 and 3,912,688), the aromatic sulfonyl diphenols used in those polymers have a 4,4'-isomer purity of less than about 90 wt. %. In order to improve the heat deflection temperature, it is essential

that aromatic sulfonyl diphenols have a 4,4'-isomer purity of at least about 99.9 wt. %. The prior art copolymers and terpolymers will not, therefore, exhibit the improved heat deflection temperatures exhibited by the copolycarbonates of the present invention.

The invention will be further illustrated, but is not intended to be limited, by the following examples.

EXAMPLES

EXAMPLE 1

A copolycarbonate resin was prepared by reacting a mixture of the disodium salts of 2,2-bis-(4-hydroxyphenyl)-propane (bisphenol A) and 4,4'-sulfonyl diphenol (greater than 99.9% isomer purity) with phosgene in accordance with the interfacial polycondensation synthesis hereinbefore discussed. 5 wt. % of 4,4'-sulfonyl diphenol and 95 wt. % of bisphenol A, based on the weight of the diphenols, were used. The copolycarbonate resin was mixed with an amount of a phosphate-based stabilizer necessary to produce a concentration of about 0.01 wt.% in the final product. The mixture was then extruded in a 2" single screw Welding Engineers' Extruder. The extruder strands were then pelletized, and 1/8" thick standard samples were molded for evaluation of physical properties. The properties measured are reported in Table I. Additionally, the molded copolycarbonate samples were found to be highly transparent.

Example 2

Example 1 was repeated except 10 wt. % of 4,4'-sulfonyl diphenol and 90 wt. % of bisphenol A, based on the total weight of diphenols, were used. 1/8" thick molded

samples were again prepared for evaluation of physical properties. The properties are reported in Table I. Again, the molded polycarbonate samples were found to be highly transparent.

EXAMPLE 3

Example 1 was repeated except that the polycarbonate produced was based on 100 wt. % bisphenol A. The physical properties measured are reported on Table I.

EXAMPLE 4

112.5 lbs of a 95 wt. % BPA/5 wt. % SDP copolycarbonate resin having a melt flow rate of 6.5 gms/10 min. (ASTM D-1238) was dried overnight in a circulating air oven at 110$^{o}$C. The copolycarbonate resin in the form of hot pellets was mixed with 34 gms. of a phosphite-based stabilizer in a ribbon-type continuous blender. This blend was then fed to a Werner-Pfleiderer ZSK-53 V twin screw extruder with 12.5 lbs. (11% by weight) of 3/16" long glass fibers being added to the twin screw extruder. The temperature profile of the extrusion was:

| Zone | Barrel Set Temperature | Melt Temperature |
|---|---|---|
| 1 | 330 | 315 |
| 2 | 330 | 292 |
| 3 | 330 | 312 |
| 4 | 250 | 288 |
| 5 | 250 | 284 |
| Die | 260 | 284 |

The extruder strands were pelletized and 1/8" thick standard samples were molded for evaluation of physical properties including heat deflection temperature. The test results are reported in Table II.

EXAMPLE 5

Example 4 was repeated except that the reinforced copolycarbonate contained 17.8 % by weight of 3/16" glass fibers. The test results are reported in Table II.

EXAMPLE 6

Example 4 was repeated except that the copolycarbonate resin used having a melt flow rate of 2.6 gms/10 min. (ASTM D-1238), was blended with 50 gms. of a phosphite-based stabilizer and was reinforced with 10 wt. % of 3/16" glass fibers. The test results are reported in Table II.

EXAMPLE 7

Example 6 was repeated except that the copolycarbonate was reinforced with 18.4 wt. % of 3/16" glass fibers. The test results are reported in Table II.

EXAMPLE 8

Example 4 was repeated except that the copolycarbonate resin contained 10 wt. % of 4,4'-sulfonyl diphenol and had a melt flow rate of 2.9 gms/10 min. (ASTM D-1238), was blended with 50 gms. of a phosphite-based stabilizer and was reinforced with 9.6 wt. % of 3/16" glass fibers. The test results are reported in Table II.

EXAMPLE 9

Example 8 was repeated except that the copolycarbonate was reinforced with 19.8 wt. % of 3/16" glass fibers. The test results are reported in Table II.

EXAMPLE 10

Example 4 was repeated except that no 4,4'-sulfonyl diphenol was used, the polycarbonate resin had a melt flow rate of 3.4 gms/10 min. (ASTM D-1238) and the polycarbonate was reinforced with 9.6 wt % of 3/16" glass fibers. The

test restuls are reported in Table II.

EXAMPLE 11

Example 10 was repeated except that the polycarbonate was reinforced with 20 wt % of 3/16" glass fibers. The test results are reported in Table II.

EXAMPLE 12

Example 11 was repeated except that the polycarbonate had a melt flow rate of 12-14 gms/10 min. (ASTM D-1238). The test results are reported in Table II.

TABLE I

PROPTERTIES OF NON REINFORCED BPA/SDP COPOLYCARBONATES

| EXAMPLES | 1 | 2 | 3 (control) |
|---|---|---|---|
| Wt. % BPA[1] | 95 | 90 | 100 |
| Wt. % SDP[2] | 5 | 10 | -- |
| Izod Notched Impac (ft.lb/in.) | | | |
| 1/8" specimen | 15.03 | 14.80 | 18.44 |
| 1/4" specimen | 3.92 | 3.65 | 3.20 |
| Drop Dart Impact[4] (ft.lbs.) | | | |
| 1/8" specimen | 107.43 | 107.43 | 107.43 |
| Critical Thickness[5] (mils) | 235 | 225 | 227 |
| Relative Viscosity[6] | 1.332 | 1.332 | 1.335 |
| Melt Index[7] (gm/10 min.) | 2.6 | 2.9 | 3.1 |
| Heat Deflection Temperature at 264 psi ($^{o}$C)[8] | 145 | 147 | 134 |
| Yield Tensile Strength[9] (psi) | 9,900 | 9,300 | 9,800 |
| Ultimate Tensile Strength[10] (psi) | 9,400 | 9,100 | 10,000 |
| Elongation Yield[11] (%) | 10 | 10 | 8 |
| Ultimate Elongation[12] (%) | 100 | 95 | 105 |
| Flexural Modulus[13] (psi) | 344,000[5] | 339,000[5] | 320,000[5] |
| % Sulfur By Analysis Found (Theory) | 0.63(0.57) | 1.28(1.21) | -- |

**TABLE II**

**PROPERTIES OF GLASS-REINFORCED BPA/SDP COPOLYCARBONATES**

| EXAMPLE | COMPOSITION | MELT-FLOW[7] RATE (GMS/10 MIN) | GLASS (WT %) | RELATIVE VISCOSITY[6] OF RESIN | IZOD 1/8"[3] NOTCHED IMPACT (FT LBS/IN) | DROP DART[4] (FT/LB) | ULTIMATE TENSILE[10] STRENGTH (PSI) | ELONGATION[1] YIELD (%) | FLEXURAL[13] MODULUS (PSI) | ULTIMATE FLEXURAL[14] STRENGTH (PSI) | HEAT DEFLECTION TEMP. at 264 PSI (°C) |
|---|---|---|---|---|---|---|---|---|---|---|---|
| 4 | 95 wt % BPA[1]<br>5 wt % SDP[2] | 6.5 | 11.0 | -- | 2.4 | 41.0 | 12,500 | 3 | 610,000 | 18,200 | 145 |
| 5 | 95 wt % BPA<br>5 wt % SDP | 6.5 | 17.8 | -- | 2.6 | 2.6 | 14,300 | 2 | 830,000 | 20,400 | 147 |
| 6 | 95 wt % BPA<br>5 wt % SDP | 2.6 | 10.0 | 1.325 | 2.2 | 11.3 | 11,800 | 2 | 580,000 | 18,400 | 152 |
| 7 | 95 wt % BPA<br>5 wt % SDP | 2.6 | 18.4 | 1.327 | 2.4 | 2.4 | 13,900 | 2 | 830,000 | 20,300 | 153 |
| 8 | 90 wt % BPA<br>10 wt % SDP | 2.9 | 9.6 | 1.329 | 2.1 | 11.3 | 12,200 | 3 | 570,000 | 19,000 | 150 |
| 9 | 90 wt % BPA<br>10 wt % SDP | 2.9 | 19.8 | 1.325 | 2.3 | 1.3 | 14,800 | 3 | 870,000 | 20,900 | 152 |
| 10 | 100 wt % BPA | 3.4 | 9.6 | 1.329 | 4.8 | 77.5 | 11,100 | 3 | 570,000 | 17,200 | 146 |
| 11 | 100 wt % BPA | 3.4 | 20.0 | 1.326 | 2.8 | 7.8 | 13,000 | 3 | 896,000 | 18,700 | 148 |
| 12 | 100 wt % BPA | 12-14 | 20.0 | -- | 3.3 | 29.5 | 10,400 | 3 | 900,000 | 16,300 | [illegible] |

0000547

[1]BPA is bisphenol A.

[2]SDP is 4,4'-sulfonyl diphenol. (4,4'isomer purity of at least about 99 wt. %).

[3]ASTM D-256.

[4]Drop dart was measured by dropping a 10.4 lb. weight with a contact surface of a 1" diameter hemisphere upon a 1/8" thick, 4" diameter, securely clamped, molded specimen. The drop height corresponding to a 50 % breakage of the specimen was proportional to the drop dart impact strength of the test specimen. The limit of the testing equipment used was 107.43 ft. lbs.

[5]Critical thickness is defined as the thickness at which a discontinuity in Izod impact values occurs; i.e., it is the thickness at which a transition from a brittle to a ductile break occurs or vice versa.

[6]0.5 g resin/100 ml methylene chloride at 25°C.

[7]ASTM D-1238 at 300°C.

[8]ASTM D-648.

[9]ASTM D-638.

[10]ASTM D-638.

[11]ASTM D-638.

[12]ASTM D-638.

[13]ASTM D-790.

[14]ASTM D-790.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

WHAT IS CLAIMED IS:

1. In an aromatic polycarbonate based on the reaction product of an aromatic diphenol and a carbonic acid derivative, the improvement comprising incorporating into said reaction product an effective amount of an aromatic sulfonyl diphenol of the structural formula

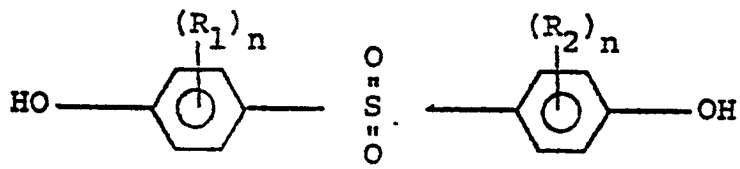

having a 4,4'-isomer purity of at least about 99.9 wt. %

wherein $R_1$ and $R_2$ may be the same or different and are H, $C_1$-$C_4$-alkyl, Cl or Br, and n equal 0 to 2

whereby the heat deflection temperature of said aromatic polycarbonate is improved.

2. The aromatic polycarbonate of Claim 1 wherein said sulfonyl diphenol is of the structural formula

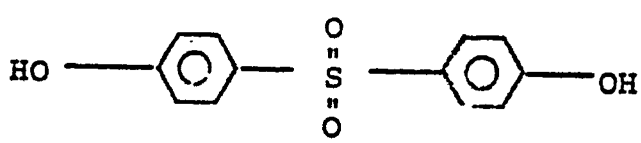

3. The aromatic polycarbonate of Claim 1 wherein said sulfonyl diphenol is incorporated into said reaction product at a level of about 1 to 50 wt. % based on the total weight of diphenols.

4. The aromatic polycarbonate of Claim 3 wherein said sulfonyl diphenol is incorporated into said reaction product at a level of about 1 to 20 wt. % based on the total weight of diphenols.

5. The aromatic polycarbonate of Claim 1 reinforced with about 5 to 40 % by weight of glass fibers, based on the total weight of the aromatic polycarbonate.

6. An aromatic copolycarbonate comprising a copolycarbonate resin which is prepared by a process comprising reacting

(a) an aromatic diphenol,

(b) about 1 to 50 wt. %, based on the total weight of diphenols, of an aromatic sulfonyl diphenol of the structural formula

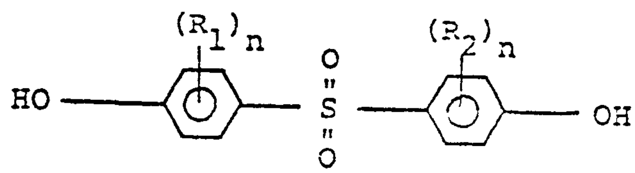

having a 4,4'-isomer purity of at least about 99.9 wt. % wherein $R_1$ and $R_2$ are the same or different and are H, $C_1$-$C_4$-alkyl, Cl or Br, and n equals 0 to 2, and

(c) a member selected from the group consisting of carbonyl bromide, phosgene, bischloroformic esters of (a) or (b) and diaryl carbonates.

7. The aromatic copolycarbonate of Claim 6 wherein the aromatic diphenol is bisphenol A.

8. A method of preparing an aromatic copolycarbonate have improved heat deflection temperatures comprising reacting

(a) an aromatic diphenol of the structural formula

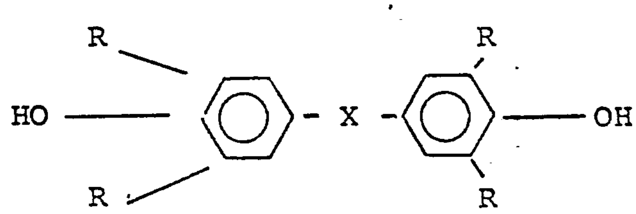

wherein

R is identical or different and denotes H, $C_1$-$C_4$-alkyl, Cl or Br, and

X is a bond, $C_1$-$C_8$-alkylene, $C_2$-$C_8$-alkylidene, $C_5$-$C_{15}$-cycloalkylidene, -S-, -SO-, -CO- or

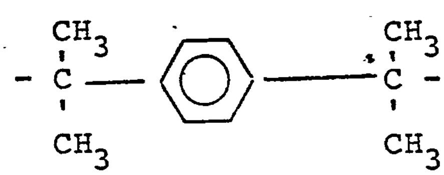

(b) about 1 to 50 wt. %, based on the total weight of diphenols, of an aromatic sulfonyl diphenol of the structural formula

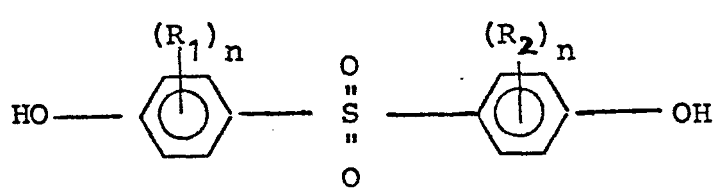

having a 4,4'-isomer purity of at least about 99,9 wt. %

wherein

$R_1$ and $R_2$ are the same or different and are H, $C_1$-$C_4$-alkyl, Cl or Br and

n equals 0 to 2, and

(c) a member selected from the group consisting of carbonyl bromide, phosgene, bischloroformic esters of (a) or (b) and diaryl carbonates.

European Patent Office

**EUROPEAN SEARCH REPORT**

0000547

Application number
EP 78 10 0447

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| D | FR - A - 1 561 518 (GENERAL ELECTRIC)(Cited in the application)<br>* Pages 2 and 3; abstract 1 *<br>-- | 1-8 | C 08 G 63/68<br>C 08 L 69/00 |
| D | US - A - 3 023 101 (A. OSSENBRUNNER et al.)(Cited in the application)<br>* Columns 8,9; claim 1 *<br>-- | 1-8 | |
| D | US - A - 3 912 688 (P. SCHILLER et al.)(Cited in the application)<br>* Columns 6,7; claim 1 *<br>-- | 1-8 | TECHNICAL FIELDS SEARCHED (Int.Cl.²)<br>C 08 G 63/68<br>C 08 L 69/00 |
| D | US - A - 3 271 367 (H. SCHNELL et al.)(Cited in the application)<br>* Column 6; claim 1 *<br>-- | 1-8 | |
| | US - A - 3 737 409 (D.W. FOX)<br>* Columns 5,6; claim 1 *<br>-- | 1-8 | |
| | DE - A - 1 175 691 (BAYER)<br>* Column 1, lines 1-9; column 8, lines 49-68; columns 9,10; claim 1 *<br>---- | 1 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| The Hague | 08-11-1978 | STIENON |

EPO Form 1503.1 06.78